# EUROPEAN PATENT APPLICATION

(11) **EP 2 587 181 A1**
(43) Date of publication of application: **01.05.2013**
(21) Application number: 12190573.1
(22) Date of filing: 30.10.2012
(51) Int. Cl.: F24F 13/32, E04F 15/024, F16M 5/00

(54) **Supporting structure for climate control machine with underfloor air flow**

(30) Priority: 31.10.2011 IT PD20110340
(71) Applicant: Emerson Network Power S.R.L., 35028 Piove di Sacco (PD) (IT)
(72) Inventor: De Zen, Daniele, 35020 Correzzola PD (IT)
(74) Representative: Modiano, Micaela Nadia

(57) **Abstract**

A supporting structure (10) for a climate control machine with underfloor air flow, the climate control machine (11) comprising a cabinet (12) which contains heat exchange means below which there are one or more fans (13) designed to aspirate air from the inside of the cabinet to introduce it into a space formed below a raised floor.

The supporting structure comprises, below the cabinet (11) and fixed thereto, a supporting framework (14) for the fans (13), which is provided with a series of legs (15) of adjustable height with fine adjustment means.

## Description

The present invention relates to a supporting structure for a climate control machine with underfloor air flow.

Server rooms, and in general any site that contains numerous electronic devices and racks for supporting a plurality of servers, electrical and electronical instruments and the like, generally enclosed within adapted ventilated cabinets, require a continuous climate control that is adapted to prevent the heat originating from the computers and from the electronic instruments themselves from accumulating and thus causing temperatures that are so high as to damage the internal components of such electronical instruments and the like.

Nowadays, in order to overcome these drawbacks, floor climate control plants are generally installed in server rooms, and are increasingly widespread particularly in environments installed on a raised floor.

In fact the space between the ground and the raised floor can be easily fitted out not only for the distribution of cables for connecting and powering the racks and computers, but also as a plenum space, i.e. as an area for the passage of conditioned air, fed in by one or more cooling and climate control machines, such plenum spaces conveying the air either to the overlying environment by way of floor grilles, or directly into the rack cabinets.

Machines for such climate control are generally constituted by a cabinet within which heat exchange means are arranged below which there are, generally arranged below the raised floor, a plurality of fans which are designed to aspirate air from the upper part of the cabinet so that it crosses the heat exchange means and is then pushed, treated, into the underfloor interspace.

Nowadays such climate control machines are supported either by the raised floor itself, for small and relatively light climate control machines, or, for heavy climate control machines, they rest on the same ground on which the supports of the raised floor rest, by means of an additional frame.

Such an additional frame is expressly made with dimensions that are such as to support the cabinet flush with the raised floor; thus for every installation of a climate control machine it is necessary to provide the machine with an adapted dedicated supporting framework, which thus imposes additional costs on the purchaser.

Alternatively, the purchaser makes do with contrivances during the installation of the machine, supporting it with feet or other makeshift supports.

The aim of the present invention is to provide a structural frame for climate control machines, which is capable of overcoming the above-mentioned drawbacks of the known art.

Within this aim, an object of the invention is to provide a supporting structure for a climate control machine which does not require the provision of expressly dedicated auxiliary supporting frameworks.

Another object of the invention is to provide a supporting structure for a climate control machine the installation of which requires the installing technician to carry out simple operations which can be performed manually and with conventional tools.

Another object of the invention is to provide a supporting structure for a climate control machine which can be produced using known systems and technologies.

This aim and these and other objects which will become more evident hereinafter are achieved by a supporting structure for climate control machines with underfloor air flow, said climate control machine comprising a cabinet which contains heat exchange means below which there are one or more fans designed to aspirate air from the inside of the cabinet to introduce it into a space formed below a raised floor, said supporting structure being **characterized in that** it comprises, below said cabinet and fixed thereto, a supporting framework for said fans, which is provided with a series of legs of adjustable height with stepwise fixing means and fine adjustment means.

Further characteristics and advantages of the invention will become more apparent from the description of a preferred, but not exclusive, embodiment of the supporting structure according to the invention, which is illustrated by way of non-limiting example in the accompanying drawings wherein:

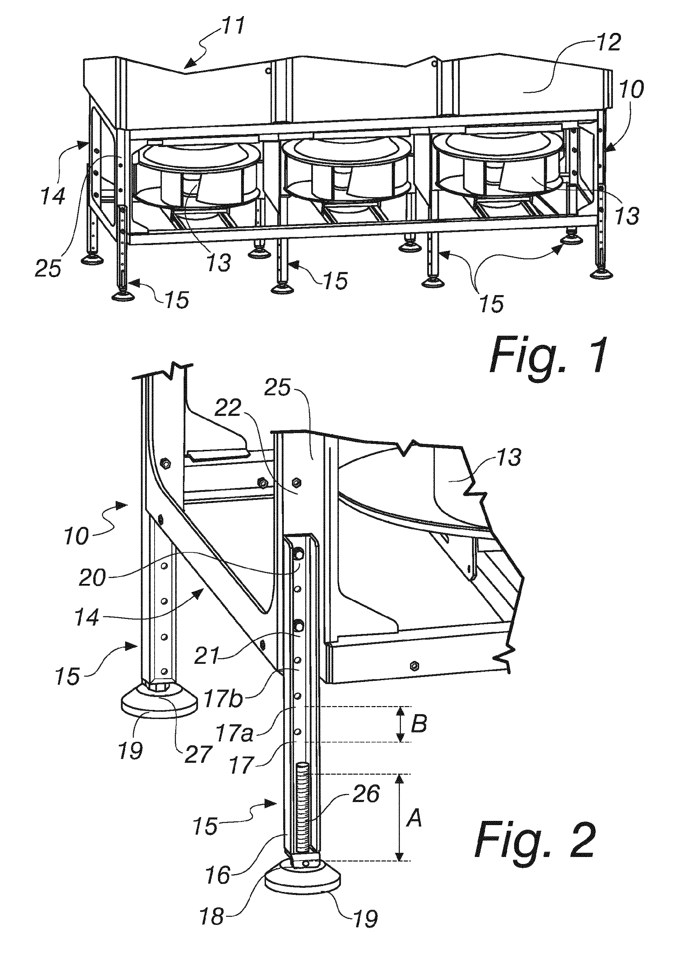

Figure 1 is a perspective view of a climate control machine provided with a supporting structure according to the invention;
Figure 2 is a detail of the supporting structure according to the invention;

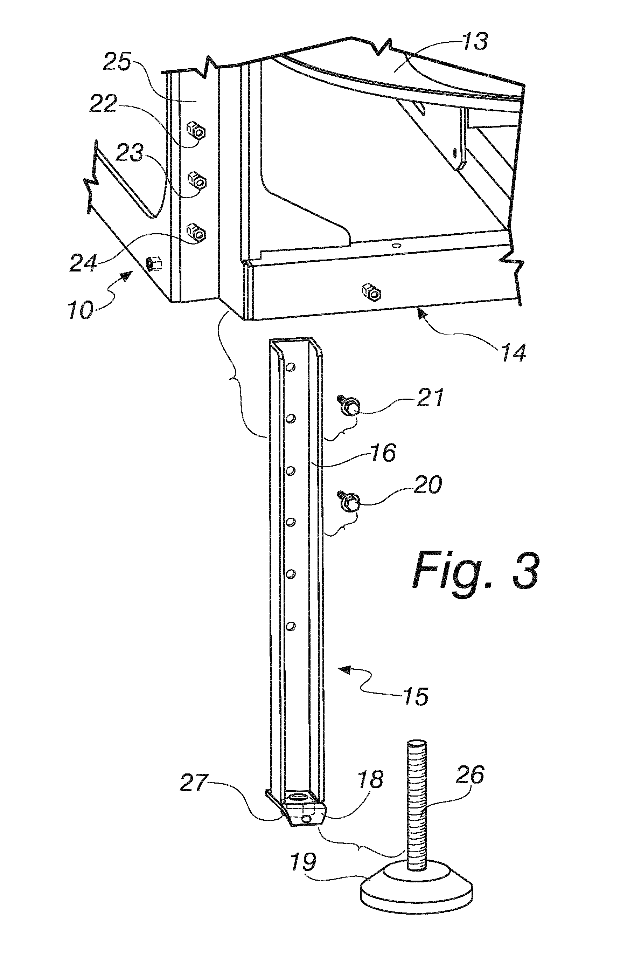

Figure 3 is an exploded perspective view of the detail in Figure 2.

With reference to the figures, a supporting structure for climate control machines with underfloor air flow is generally designated with the reference numeral 10.

A generic climate control machine is indicated with 11, and is understood to comprise a cabinet 12 which contains heat exchange means, not shown for the sake of simplicity, below which there are one or more fans 13 designed to aspirate air from the inside of the cabinet to introduce it into a space formed below a raised floor.

Below the cabinet 11, and fixed thereto, there is a frame 14 for supporting fans 13, which is provided with a series of legs 15, of adjustable height with stepwise fixing means and fine adjustment means.

Each leg 15 is constituted by a metallic profile 16 which is provided with a series of equidistant holes, of which some are indicated by way of example with the numerals 17, 17a, 17b.

Such holes 17, 17a, 17b are arranged in a row along one face of the metallic profile 16.

Fixed to one end of the metallic profile 16 is a plate 18 which supports a resting foot 19.

The stepwise fixing means are formed, for each leg 15, by two screws 20 and 21 which are placed to pass through any one of the holes 17 formed on the leg 15 and a corresponding fixing hole 22, 23 or 24 which is formed on a corresponding upright 25 of the frame 14 which supports the fans.

Nuts for the screws 20 and 21 are welded at the fixing holes 22, 23 and 24 within the frame 14.

The fine adjustment means also comprise a threaded shank 26 which supports the foot 19 and is screwed to a corresponding nut 27 which is fixed, for example welded, to the plate 18 arranged at the end of the metallic profile 16 which defines a leg 15.

The useful length A of the thread of the threaded shank 26 is greater than the distance B between two consecutive holes 17 of the leg 15.

In this manner, once it is determined at which of the heights defined by the holes 17 the metallic profile 16 is to be fixed, it is subsequently possible to establish any intermediate height between two consecutive holes 17 for the leg 15, since the stepwise adjustment by way of the screws 20 and 21 and the holes 17 in the metallic profile 16, together with the adjustment by screwing of the threaded shank 26 of the foot 19, enable a continuous, and therefore fine, adjustment of the overall height of the leg 15.

In practice it has been found that the invention fully achieves the intended aim and objects.

In particular, with the invention a supporting structure for a climate control machine is provided which does not require the provision of expressly dedicated auxiliary supporting frameworks, the structure itself being provided with legs of adjustable height in a fine and continuous manner.

What is more, with the invention a supporting structure for a climate control machine is provided the installation of which requires the installing technician to carry out simple operations which can be performed manually and with conventional tools.

In addition, with the invention a supporting structure for a climate control machine is provided which can be produced using known systems and technologies.

The invention, thus conceived, is susceptible of numerous modifications and variations, all of which are within the scope of the appended claims. Moreover, all the details may be substituted by other, technically equivalent elements.

In practice the materials employed, and the contingent dimensions and shapes, may be any according to requirements and to the state of the art.

The disclosures in Italian Patent Application No. PD2011A000340 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A supporting structure (10) for a climate control machine with underfloor air flow, said climate control machine (11) comprising a cabinet (12) which contains heat exchange means below which there are one or more fans (13) designed to aspirate air from the inside of the cabinet to introduce it into a space formed below a raised floor, said supporting structure being **characterized in that** it comprises, below said cabinet (11) and fixed thereto, a supporting framework (14) for said fans (13), which is provided with a series of legs (15) of adjustable height with stepwise fixing means and fine adjustment means.

2. The supporting structure according to claim 1, **characterized in that** each leg (15) is constituted by a metallic profile (16) which is provided with a series of equidistant holes (17, 17a, 17b) which are arranged in a row along one of its faces, a plate (18) being fixed to one end and supporting a resting foot (19).

3. The supporting structure according to one or more of the preceding claims, **characterized in that** said stepwise fixing means are defined, for each leg (15), by at least one screw (20) which is arranged so as to pass through any one of the holes (17, 17a, 17b) formed in said leg (15) and a corresponding fixing hole (22) formed in a corresponding upright (25) of said fan supporting framework (14).

4. The supporting structure according to one or more of the preceding claims, **characterized in that** said fine adjustment means comprise a threaded shank (26) which supports said foot (19) and is screwed to a corresponding nut (27) which is fixed to said plate (18) arranged at the end of the metallic profile (16) that forms said leg (15), the useful length (A) of the thread of said threaded shank (26) being greater than at least the distance (B) between two consecutive holes (17, 17a, 17b) of said leg (15).
